Europäisches Patentamt

European Patent Office

Office européen des brevets

(19)

(11) **EP 0 882 251 B1**

(12) **FASCICULE DE BREVET EUROPEEN**

(45) Date de publication et mention
de la délivrance du brevet:
**07.12.2005 Bulletin 2005/49**

(51) Int Cl.⁷: **G02F 1/11**, H01S 3/00

(21) Numéro de dépôt: **97931873.0**

(22) Date de dépôt: **04.07.1997**

(86) Numéro de dépôt international:
**PCT/FR1997/001206**

(87) Numéro de publication internationale:
**WO 1998/001788 (15.01.1998 Gazette 1998/02)**

(54) **DISPOSITIF DE CONTROLE D'IMPULSIONS LUMINEUSES PAR UN DISPOSITIF PROGRAMMABLE ACOUSTO-OPTIQUE**

LICHTIMPULSKONTROLLE MITTELS PROGRAMMIERBARER AKUSTOOPTISCHER VORRICHTUNG

DEVICE FOR CONTROLLING LIGHT PULSES BY A PROGRAMMABLE ACOUSTO-OPTIC MEANS

(84) Etats contractants désignés:
**AT DE FR GB IT**

(30) Priorité: **09.07.1996 FR 9608510**
**03.09.1996 FR 9610717**

(43) Date de publication de la demande:
**09.12.1998 Bulletin 1998/50**

(73) Titulaire: **Thales**
**92200 Neuilly-Sur-Seine (FR)**

(72) Inventeur: **TOURNOIS, Pierre,**
**Thomson-CSF S.C.P.I.**
**F-94117 Arcueil Cedex (FR)**

(74) Mandataire: **Esselin, Sophie**
**Marks & Clerk France**
**31-33 Avenue Aristide Briand**
**94117 Arcueil Cedex (FR)**

(56) Documents cités:
**US-A- 3 862 413        US-A- 5 499 134**

• **FERMANN M E ET AL: "Shaping of ultrashort optical pulses by using an integrated acousto-optic tunable filter" OPTICS LETTERS, 15 SEPT. 1993, USA, vol. 18, no. 18, ISSN 0146-9592, pages 1505-1507, XP000396924**
• **MAINE P ET AL: "Generation of ultrahigh peak power pulses by chirped pulse amplification" IEEE JOURNAL OF QUANTUM ELECTRONICS, FEB. 1988, USA, vol. 24, no. 2, ISSN 0018-9197, pages 398-403, XP002027808**
• **SCHWEICHER E ET AL: "Acousto-optical signal processing and integrated optics" REVUE HF, 1988, BELGIUM, vol. 14, no. 3-4, ISSN 0035-3248, pages 88-122, XP000111402**
• **TOURNOIS P: "Acousto-optic programmable dispersive filter for adaptive compensation of group delay time dispersion in laser systems" OPTICS COMMUNICATIONS, 1 AUG. 1997, ELSEVIER, NETHERLANDS, vol. 140, no. 4-6, ISSN 0030-4018, pages 245-249, XP002042337**

## Description

L'invention concerne un dispositif de contrôle d'impulsions lumineuses par un dispositif programmable acousto-optique et son application à des dispositifs de traitement d'impulsion et notamment à une source laser à impulsions ultra-courtes.

On connaît dans la technique des dispositifs mettant en oeuvre l'interaction de dispositifs acoustiques sur le comportement de signaux optiques.

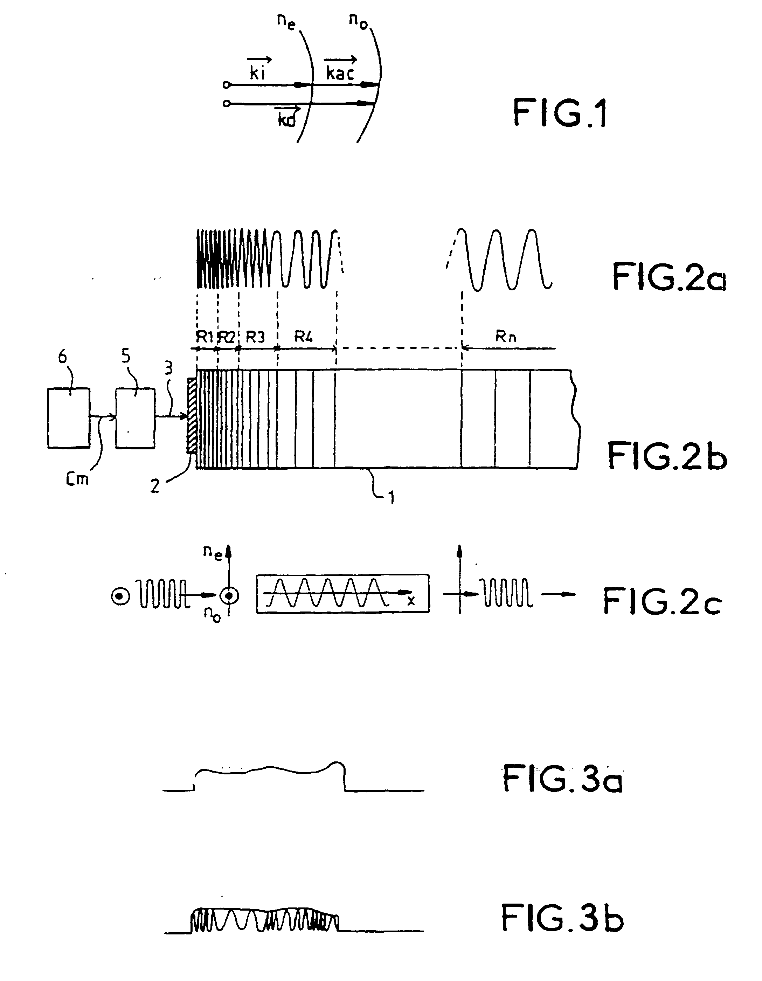

Si on considère un milieu acoustique et notamment un milieu élasto-optique anisotrope dans lequel on introduit une onde acoustique qui a pour effet d'induire des variations d'indices optiques dans ce milieu et si on introduit dans ce milieu une onde optique colinéaire à la direction de propagation de l'onde acoustique, on a, une intéraction entre l'onde acoustique et l'onde optique. Cette intéraction est due aux variations d'indices sur l'onde optique. Si l'onde optique et l'onde acoustique sont colinéaires, on a un couplage d'une onde optique diffractée $\kappa d$ à une onde optique incidente $\kappa i$ par une onde acoustique $\kappa ac$ comme cela est représenté en figure 1 et on a : $\vec{\kappa d} = \vec{\kappa i} + \vec{\kappa ac}$

Cette interaction acousto-optique couple l'onde incidente optique de nombre d'onde $\beta_1$, à l'onde diffractée optique de nombre d'onde $\beta_2$ par l'intermédiaire d'une onde acoustique de nombre d'ondes K dans un matériau élasto-optique anisotrope

Posant

$$\Delta\beta = \beta_1 - \beta_2 \pm K \tag{1}$$

l'amplitude $A_2(z)$ du champ électrique $E_2$ de l'onde optique diffractée est couplée à l'amplitude $A_1(z)$ du champ électrique $E_1$ de l'onde optique incidente par les relations :

$$\begin{cases} \dfrac{\partial}{\partial z} A_1 = -i\kappa A_2 e^{i(\Delta\beta)z} \\ \dfrac{\partial}{\partial z} A_2 = -i\kappa^* A_1 e^{-i(\Delta\beta)z} \end{cases} \tag{2}$$

$\kappa$ étant la constante de couplage.

Les solutions des équations (2) s'écrivent pour $A_2(0) = 0$ :

$$\begin{cases} A_1(z) = A_1(0)e^{i\frac{\Delta\beta}{2}z}\left[\cos sz - i\frac{\Delta\beta}{2s}\sin sz\right] \\ A_2(z) = i\dfrac{\kappa^*}{s}A_1(0)e^{-i\frac{\Delta\beta}{2}z}\sin sz \end{cases} \tag{3}$$

avec :

$$|\kappa|^2 = \frac{\omega^2}{16c^2}(n_1 n_2)^3 p^2 S^2 \tag{4}$$

$$I_{ac} = \frac{1}{2}\rho v^3 S^2$$

$$S^2 = |\kappa|^2 + \left(\frac{1}{2}\Delta\beta\right)^2$$

- $\omega$ étant la pulsion optique,
- c la vitesse de la lumière dans le vide,
- $n_1$ et $n_2$ les indices optiques associés respectivement à l'onde incidente et à l'onde diffractée,
- p la constante élasto-optique,
- S la contrainte acoustique,
- $\kappa$ la constante de couplage,
- $\rho$ la masse spécifique du matériau,
- v la vitesse acoustique et $I_{ac}$ l'intensité acoustique.

A une distance Z la fraction d'énergie transférée de $A_1$ vers $A_2$ est :

$$T = \frac{|A_2(Z)|^2}{|A_1(0)|^2} = \frac{|\kappa|^2}{|\kappa|^2 + \left(\frac{\Delta\beta}{2}\right)^2} \sin^2\left[|\kappa|^2 + \left(\frac{\Delta\beta}{2}\right)^2\right]^{1/2} . z \quad (5)$$

La totalité de l'énergie de l'onde incidente est transférée sur une onde diffractée à une distance $L_c$, appelée longueur de couplage, lorsque :

$$\begin{cases} \Delta\beta = 0 \rightarrow \beta_1 = \beta_2 \pm K \\ |\kappa|.L_c = \pi/2 \end{cases} \qquad (6)$$

Si l'onde optique incidente porte un signal $s_i$ (t) et l'onde acoustique de couplage un signal a (t), l'onde optique diffractée dans une interaction colinéaire portera le signal de la forme :

$$S_d(t) = S_i(t) * a(t)$$

traduisant la convolution des signaux $s_i$ (t) et a (t).

Le signal $s_d$ (t) est le résultat du filtrage de $s_i$ (t) par un filtrage de réponse impulsionnelle a (t).

En particulier, si le signal $s_i$ (t) est une impulsion optique très courte et le signal a (t) une impulsion acoustique longue modulée en amplitude ou en fréquence de produit BT (bande passante $\times$ durée), le signal $s_d$ (t) sera une impulsion optique longue modulée en amplitude ou en fréquence de même produit BT recopiant fidèlement le code de l'onde acoustique tel que $\Delta\beta = 0$ :

$$f_{opt} = \frac{c}{v} \cdot \frac{f_{ac}}{|n_2 - n_1|}$$

$$B_{opt} = \frac{c}{v.|n_2 - n_1|} B_{ac}$$

$$B_{opt}. T_{opt} = B_{ac}. T_{ac}$$

- $f_{opt}$ étant la fréquence optique,
- $f_{ac}$ la fréquence acoustique,
- $B_{opt}$ la bande passante optique
- et $B_{ac}$ la bande acoustique.

Dans les montages d'amplification d'impulsions lumineuses modulées en fréquence appelés CPA (Chirp Pulse Amplification), le problème consiste à générer à partir d'une impulsion optique très courte un signal optique long modulé en fréquence qui sera recomprimé après l'amplification laser.

Le dispositif de compression soumis à des puissances crêtes élevées, ne peut pas être programmable. Il est donc souhaitable que le dispositif d'extension qui opère à signal optique faible soit rendu programmable en fonction des défauts et des instabilités de la chaîne d'amplification laser.

En effet, lorsque le dispositif d'extension est parfaitement adapté au dispositif de compression en l'absence de chaîne d'amplification laser, le signal recomprimé est quasi-identique au signal optique très court de départ avant l'extension. Mais en présence de la chaîne d'amplification qui déforme les signaux, le signal recomprimé n'est pas identique au signal initial même lorsque l'extenseur et le compresseur sont parfaitement adaptés.

Le seul moyen de compenser les défauts de l'amplification et de la compression est de disposer d'un filtre d'extension programmable.

Il est connu du document US-A-3 862 413 un dispositif acousto-optique programmable comprenant un milieu élasto-optique muni d'un transducteur acoustique capable de générer une onde acoustique dans le milieu élasto-optique, des moyens de couplage d'une impulsion optique d'entrée polarisée, un circuit de programmation de la modulation en fréquence ou en phase de l'onde acoustique et qui fournit une impulsion optique qui est la convolution de cette impulsion d'entrée avec le signal acoustique.

L'invention propose d'utiliser ce type de dispositif acousto-optique dans un système d'amplification pour effectuer une compensation active des distorsions.

Plus précisément, l'invention concerne une source laser comportant un dispositif acousto-optique, comprenant un milieu élasto-optique muni d'un transducteur acoustique capable de générer dans le milieu élasto-optique une onde acoustique modulée selon une direction déterminée, ainsi que des moyens de couplage d'une onde optique incidente polarisée dans le milieu élasto-optique et comportant un circuit de programmation de la modulation en fréquences ou en phase de l'onde acoustique, ledit dispositif acousto-optique fournissant une impulsion optique qui est la convolution de cette impulsion d'entrée avec le signal acoustique, ledit dispositif acousto-optique recevant une impulsion optique incidente polarisée à amplifier et fournissant une impulsion optique étendue ; ladite source comportant en outre un amplificateur optique amplifiant l'impulsion optique étendue ainsi qu'un dispositif de compression optique effectuant une compression de l'impulsion optique étendue puis amplifiée, caractérisée en ce que la modulation de l'onde acoustique est programmée de façon à compenser les distorsions de la chaîne d'amplification.

L'invention est applicable à une source laser délivrant des impulsions ultra-courtes. En effet, l'amplification d'une impulsion lumineuse se heurte aux limitations du milieu amplificateur.

Les différents objets et caractéristiques de l'invention apparaîtront plus clairement dans la description qui va suivre et dans les figures annexées qui représentent :

- la figure 1, un diagramme des ondes-optique et acoustique qui interfèrent dans le milieu acoustique ;
- les figures 2a à 2c, un exemple de réalisation d'un dispositif acousto-optique utilisé dans l'invention;
- les figures 3a et 3b, des exemples de signaux optiques étendues;
- les figures 4a à 4e, des exemples de réalisation d'un dispositif d'expansion acousto-optique;
- les figures 5a et 5b, des exemples d'application de l'invention à des architectures lasers générant une impulsion ultra-courte ;
- la figure 6, un exemple d'oscillateur à cavité.

Le dispositif de l'invention comporte une cellule élasto-optique 1 comportant une électrode ou un transducteur piézoélectrique 2 auquel est appliqué un signal électrique 3 induisant une onde acoustique a(t) dans le transducteur 1. Ce signal est modulé en fréquences par une succession de fréquences de modulation ou par une modulation variant continûment en fréquences. Un tel signal est représenté en figure 2a.

Une onde acoustique a(t) présentant les mêmes modulations en fréquences se propage donc dans le transducteur et induit des variations d'indices constituant différents réseaux (R1, R2, R3, ..., Rn) dont les pas correspondent aux fréquences de modulation. C'est ainsi que sur la figure 2b, le réseau R1 correspond à une fréquence de modulation f1, le réseau R2 correspond à une fréquence de modulation f2, le réseau R3 correspond à une fréquence de modulation f3, etc...

Le transducteur reçoit par ailleurs une onde optique polarisée linéairement se présentant sous la forme d'une impulsion de courte durée et comportant différentes fréquences. Des moyens de couplage de l'onde optique dans le milieu élasto-optique seront décrit ultérieurement.

Le milieu élasto-optique est un matériau birefringent.

Les fréquences de modulation de l'onde optique sont telles que chaque fréquence de l'impulsion lumineuse diffracte sur un réseau (R1, R2, R3, ..., Rn) ou sur une partie de réseau.

Cette diffraction a pour effet de réaliser une conversion de mode de polarisation de l'onde lumineuse. Par exemple, une onde polarisée TM est convertie en onde TE.

Le matériau du milieu élasto-optique 1 étant birefringent et l'impulsion lumineuse étant polarisée TM (par exemple), à la fréquence f1 la polarisation TM de l'impulsion est convertie en polarisation TE par le premier réseau R1 ; à la fréquence f2, la polarisation TM est convertie en TE par le réseau R2 et ainsi de suite.

La cellule est orientée de telle manière que l'impulsion lumineuse incidente a sa polarisation TM orientée suivant un axe z pour lequel l'indice optique est l'indice extraordinaire ne du milieu acousto-optique. Chaque onde optique diffractée est polarisée suivant un axe pour lequel l'indice optique est l'indice ordinaire $n_o$. Comme on le sait les vitesses de propagation des ondes sont différentes aux indices $n_e$ et $n_o$.

Si on considère différentes fréquences de l'impulsion optique f1, f2, ..., fn :

- à la fréquence f1, l'onde subit une conversion de polarisation dès le réseau R1 et parcourt la longueur du transducteur à la vitesse $v_o$ correspondant à l'indice $n_o$.
- etc,
- à la fréquence $f_n$, l'onde parcourt le transducteur à la vitesse $v_e$, excepté le réseau $R_n$, par lequel est diffractée.

On voit donc que les différentes fréquences de l'onde optique parcourent la longueur du transducteur à des vitesses moyennes différentes.

En sortie du transducteur les différentes ondes lumineuses aux différentes fréquences sont réparties dans le temps.

L'impulsion lumineuse est donc étalée dans le temps. L'énergie d'une impulsion de courte durée est répartie dans une impulsion optique de longue durée.

Le signal 3 appliqué à l'électrode du transducteur piézoélectrique est un signal électrique modulé en fréquences avec variation dans le temps de la fréquence de modulation. Le signal est fourni par un circuit de modulation 5 commandé par un signal de commande de modulation Cm (circuit 6) qui définit la loi de modulation. Par exemple, le signal Cm peut être un signal de variation linéaire et commande une variation linéaire dans le temps de la fréquence de modulation. Les différents réseaux R1 et Rn varieront alors continûment.

Selon l'invention, il est important de commander à volonté la forme du signal de commande Cm. Cela permet de programmer la variation dans le temps de la fréquence de modulation. On aura alors des réseaux de longueurs différentes et on pourra avoir une impulsion optique étendue de sortie d'une forme adaptée du type par exemple de celui de la figure 3a. Egalement, on pourra avoir une impulsion étendue dont la répartition des fréquences est choisie en fonction de la programmation (voir en figure 3b par exemple).

Le dispositif acousto-optique décrit permet donc d'étendre de façon programmable une impulsion lumineuse.

Comme symbolisé en figure 2c, le milieu acousto-optique reçoit une onde optique d'entrée ($\omega_i$, $k_i$) et interfère avec un réseau d'indice créé par une onde acoustique ($\Omega$, Kac). On considère donc que l'onde optique interfère avec l'onde acoustique. Une composante spectrale du signal de sortie est de la forme :

$$S_d(\omega_d)e^{i(\omega_d t - k_d x)} = S_i(\omega_l)e^{i(\omega_i t - k_i x)} S_{ac}(\Omega)_e^{i(\Omega t - k_{ac} x)}$$

avec les conditions de diffraction de Bragg

$$\omega_d = \omega_i + \Omega$$

$$k_d = k_i + K_{ac}$$

$$S_d(\omega_d) = S_i(\omega_i) \times S_{ac}(\Omega)$$

Il s'ensuit que le signal de sortie est la convolution :

$$S_d(t - \frac{n_d x}{c}) - S_i(t - \frac{n_i x}{c}) \otimes S_{ac}(t - \frac{x}{V_{ac}})$$

Dans ce qui précède on a considéré que l'onde acoustique et l'onde optique d'entrée sont colinéaires dans le milieu acousto-optique. Cependant, ces ondes pourraient ne pas être colinéaires. Les formules qui précédent seraient valables en considérant des formules vectorielles.

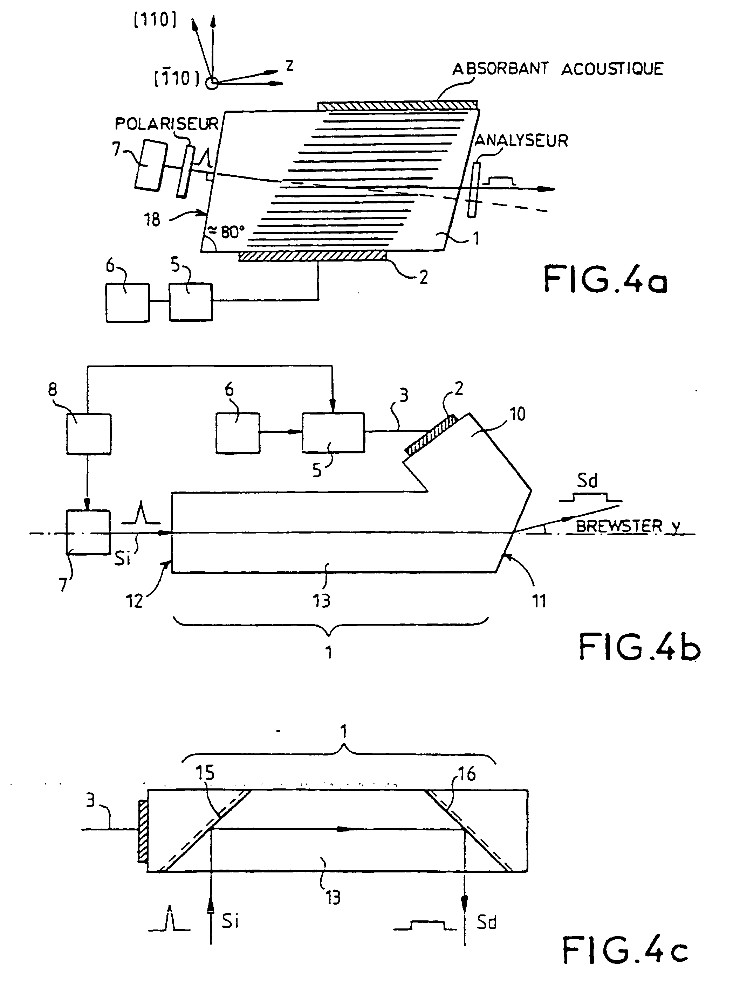

La figure 4a représente un exemple de réalisation d'un dispositif selon l'invention dans lequel les ondes optique et acoustique ne sont pas colinéaires.

Le transducteur acousto-optique est par exemple, du type décrit dans le document Acousto-Optic Tunable Filters de I.C. CHANG pubblié dans ACOUSTO-OPTIC SIGNAL PROCESSING pages 147-148 par NORMAN J. BERG - Maryland. Il possède un transducteur acousto-optique 1 possédant un transducteur piézoélectrique 2 permettant d'induire un réseau d'indice. Le transducteur accusto-optique 1 est par exemple un cristal $TeO_2$ et est orienté comme indiqué en figure 4a. La direction de propagation de l'onde optique est convenablement orientée par rapport à l'onde acoustique pour qu'il y ait interaction avec le réseau d'indice. La face d'entrée 18 est inclinée convenablement pour l'entrée de l'onde optique.

On va maintenant décrire des exemples de dispositifs acousto-optiques dans lesquels on prévoit que les ondes optique et acoustique sont colinéaires ou quasi-colinéaires.

Le matériau utilisé pour le transducteur acousto-optique est un matériau uniaxe tel que le $LiNbO_3$ ou le $CaMoO_4$, ou même le $TeO_2$. A titre d'exemple, prenons comme matériau le niobate de lithium $LiNbO_3$, comme axe de propagation l'axe y du niobate de lithium, l'axe C étant porté par l'axe z. Couplons une onde acoustique transversale de vitesse = v = 4.000m/sec polarisée suivant l'axe x du niobate de lithium à une onde optique incidente polarisée suivant l'axe z (ou c), pour laquelle l'indice optique est l'indice extraordinaire $n_1 = n_e = 2,20$. Dans ces conditions, l'onde optique diffractée sera une onde polarisée suivant l'axe x pour laquelle l'indice optique est l'indice ordinaire $n_2 = n_o = 2,29$.

Pour une longueur d'onde optique dans le vide de $\lambda_0 = 0,8\mu$ soit une fréquence optique $f_0 = 375$ THz, la fréquence de l'onde acoustique transversale devra donc être :

$$f_{ac} = \frac{v}{c}|n_e - n_o|.fo = \frac{4.10^3}{3.10^3}.0,09.3,75.10^{14} = 450\,MHz \qquad (9)$$

Si l'impulsion optique courte a une durée de 20 fsec et couvre une bande passante de $B_{o\rho t} = 0,5.10^{14}$Hz, la bande passante acoustique devra être de :

$$B_{ac} = \frac{v}{c}|n_e - n_o|B_{o\rho t} = 60\,MHz \qquad (10)$$

Pour étendre 1.000 fois cette impulsion courte pour la porter à 20 psec, la durée $T_{ac}$ de l'impulsion acoustique devra être de :

$$T_{ac} = \frac{c}{v|n_e - n_o|}|.T_{o\rho t} = 16,7\mu\sec \qquad (11)$$

et la longueur du cristal de niobate de lithium :

$$L_{ac} = v.\,T_{ac} = 66,8mm. \qquad (12)$$

Lorsqu'une impulsion longue de durée T est modulée linéairement en fréquence dans une bande B, une fréquence particulière du spectre B occupe une durée $T_f$:

$$T_f = \frac{T}{\sqrt{BT}} = \sqrt{\frac{T}{B}} \qquad (13)$$

Pour que la conversion de l'onde optique incidente vers l'onde optique diffractée soit totale (100% de rendement de conversion), il faut que la longueur de couplage $L_o$ soit égale à la longueur occupée dans le cristal par une fréquence particulière $-f_{ac}$ de la bande $B_{ac}$ soit :

$$L_o = \frac{\pi}{2|\kappa|} = v\sqrt{\frac{T_{ac}}{B_{ac}}} = \frac{c}{|n_2 - n_1|}\cdot\sqrt{\frac{T_{o\rho t}}{B_{o\rho t}}} \qquad (14)$$

soit encore, compte-tenu des relations (4) :

$$|\kappa|^2 = \frac{\omega^2}{8c^2}(n_1 n_2)^3 \, p^2 \frac{I_{ac}}{\rho v^3} = \frac{\pi^2}{4v^2} \cdot \frac{B_{ac}}{T_{ac}} \qquad (15)$$

Posant, comme habituellement,

$$M_2 = \frac{(n_1 n_2)^3 \, p^2}{\rho v^3} \qquad (16)$$

l'intensité acoustique nécessaire à un transfert total de l'énergie de l'onde incidente vers l'onde diffractée s'écrit donc :

$$I_{ac} = \frac{1}{2}\rho v \cdot \frac{\lambda_o^2}{(n_1 n_2)^3 \cdot p^2} \cdot \frac{B_{ac}}{T_{ac}} = \frac{\lambda_o^2}{2M_2 L_o^2} \qquad (17)$$

Dans le cas particulier du niobate de lithium de notre exemple :

$\rho = 4,64.10^3 kg/m^3$, $p = 0,151$ et $M_2 = 9,82.10^{-15}$ sec$^3$/kg, soit :

$$I_{ac} = 7,3W/mm^2 \qquad (18)$$

avec: $L_o = 2,1$ mm

En se reportant aux figures 4a à 4d, on va maintenant décrire différents exemples de réalisation de dispositifs acousto-optiques.

Le dispositif de la figure 4b comporte un cristal 1 qui comprend une partie 13 prévue pour la propagation de l'onde optique. Une partie 10 inclinée par rapport à la partie 13 permet la génération d'une onde acoustique dans le dispositif à l'aide d'un dispositif piézoélectrique 2 commandé par les circuits 5 et 6. L'onde acoustique générée est réfléchie par une face inclinée 11 vers la partie 13 selon la direction de propagation de l'onde optique. L'onde optique incidente $S_i$ est couplée dans le milieu 13 par une face 12 selon une direction convenablement choisie du cristal 1.

Par exemple, comme décrit précédemment, dans le cas du LiNbO$_3$ cette direction est colinéaire avec l'axe y du cristal. L'inclinaison de la face 11 est choisie de façon que la sortie de l'onde optique diffractée Sd se fasse sous incidence de Brewster.

L'onde acoustique est générée dans le milieu élasto-optique par un transducteur acoustique 2 commandé, comme on l'a vu précédemment par un modulateur 5 commandé par un circuit programmable 6.

De plus, il convient que l'émission de l'impulsion lumineuse incidente Si soit synchronisée, dans le milieu acoustique 13, avec l'onde acoustique. Pour cela, l'impulsion lumineuse $S_i$ est fournie par la source 7 dont l'émission est commandée par un circuit de synchronisation 8 qui commande également le fonctionnement du modulateur 5.

La figure 4c représente un dispositif dans lequel on a prévu, selon la direction de propagation de l'onde acoustique, des moyens pour réfléchir l'onde optique $S_i$.

L'onde acoustique est générée dans la partie 13 du cristal selon un axe du cristal choisi précédemment. Selon cet axe, sont prévus des miroirs 15 et 16 qui permettent la propagation de l'onde acoustique et qui orientée selon un angle (à 45° par exemple) permettent l'entrée de l'onde optique incidente $S_i$ et la sortie de l'onde optique diffractée. Ces miroirs 15, 16 sont par exemple des couches en matériaux diélectriques optiques. Ils peuvent être réalisés sous forme de multi-couches (par exemple $S_iO/Z_nO$, $S_iO_2/Z_nO_2$) ou en couche mince d'ITO. Pour réaliser un tel dispositif on découpe en biais un élément 1 et on dépose la multi-couche diélectrique sur la face découpée de l'élément 13, puis on recolle les deux éléments découpés pour reconstituer l'élément 1. L'épaisseur des couches de réflexion 15, 16 doit être très petite par rapport à la longueur d'onde acoustique.

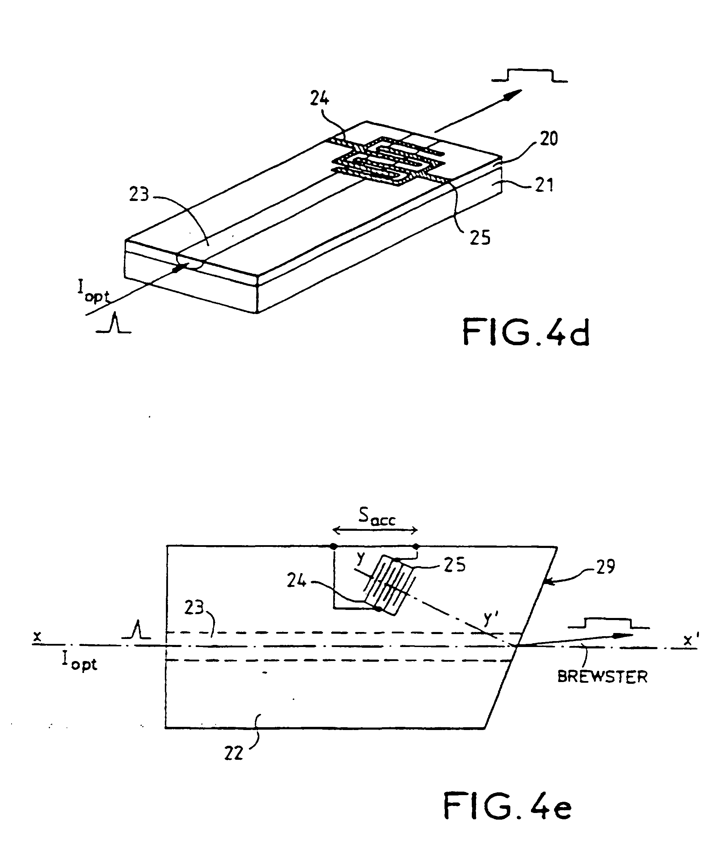

Les figures 4d, 4e représentent des exemples de réalisation du dispositif acousto-optique selon les techniques de l'optique intégrée.

Dans une couche 20 de matériau présentant des propriétés de propagation d'ondes acoustiques (LiNBO$_3$) est réalisé un guide optique 23. A la surface de la couche 20 sont prévues des électrodes interdigittées 24,25 (la couche 20 est également piézoélectrique dans ce cas).

Selon la figure 4e, une face 29 du dispositif est inclinée par rapport à l'axe des électrodes 24, 25 pour réfléchir l'onde acoustique colinéairement à l'axe du guide optique 23.

Dans ce qui précède, il est possible de prévoir, en sortie de l'onde acoustique, des moyens pour absorber l'onde acoustique (couches absorbantes).

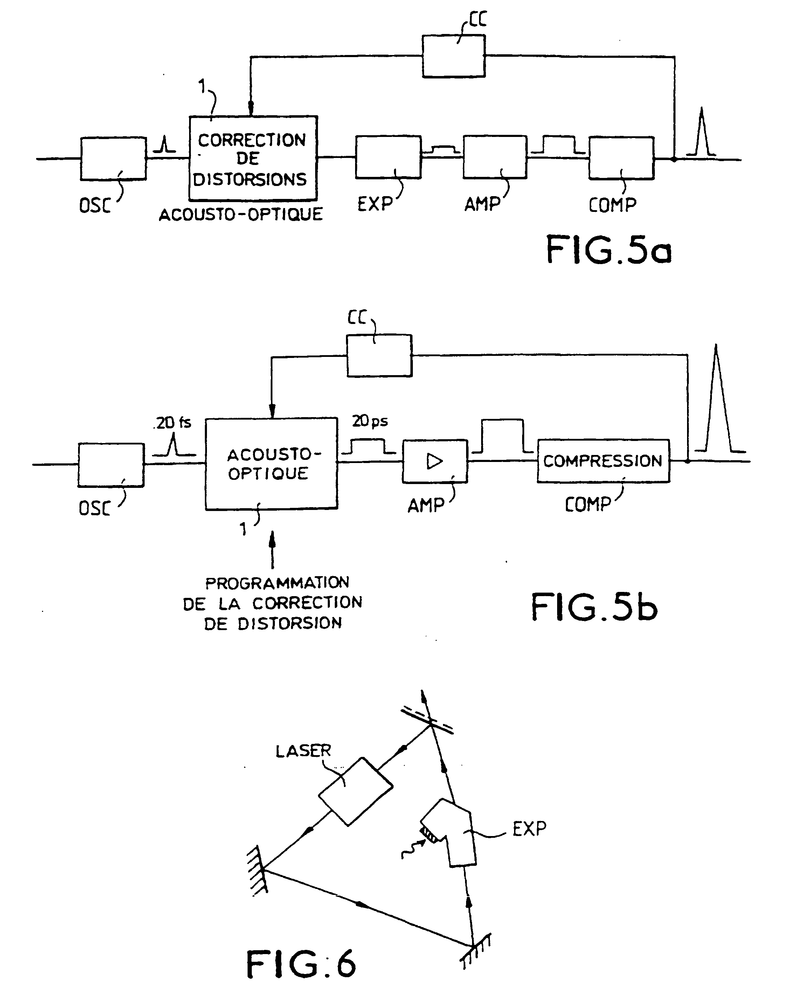

L'invention est appliquée à l'amplification d'impulsions lumineuses pour la génération d'impulsions lumineuses ultracourtes. Notamment, on veut contrôler la durée de l'impulsion. En effet, l'obtention d'une impulsion lumineuse ultra-courte de puissance crête élevée se heurte aux limites de l'amplificateur optique. L'invention prévoit donc l'application du dispositif de l'invention dans une chaîne du type de la figure 5a. Cette chaîne comporte un oscillateur fournissant des impulsions ultra-courtes qui sont étendues par le dispositif d'extension EXP. Les impulsions étendues sont ensuite amplifiées par un ou plusieurs passages dans des amplificateurs laser (AMP) pompés par flash ou par diodes. La génération d'impulsions ultra-courtes est ensuite réalisée par des moyens classiques de compression COMP à partir de paires de réseaux dispersifs par exemple. L'intérêt de l'invention tient à la possibilité de programmer l'extension de l'impulsion par le dispositif d'extension pour pouvoir compenser les effets de dispersions dus aux milieux amplificateurs et les défauts de dispersions de réseaux de compression. Selon l'invention, on prévoit donc de rendre programmable le fonctionnement du dispositif d'extension de façon à programmer l'extension des différentes fréquences contenues dans les impulsions lumineuses.

Une forme de réalisation de l'invention consiste à prévoir dans la chaîne d'amplification de la source un dispositif programmable acousto-optique tel que décrit précédemment, comme représenté en figure 5a, un dispositif acousto-optique 1 est associé à un dispositif d'extension classique EXP du type réseau dispersif.

Un oscillateur optique OSC fournit donc des impulsions optiques $I_{opt}$ de courtes durées par exemple 20 fs à un dispositif acousto-optique 1 qui est un dispositif du type décrit précédemment L'impulsion optique fournie par le dispositif 1 est transmise à un dispositif d'extension EXP qui transforme l'impulsion $I_{opt}$ en un signal de durée plus longue mais d'intensité plus faible. Ce signal est amplifié par un amplificateur AMP et le signal optique amplifié est comprimé pour donner une impulsion de courte durée et de grande amplitude. Dans ce mode de fonctionnement, le dispositif de l'invention permet de corriger l'ensemble des défauts de dispersion dus respectivement au dispositif d'extension, aux amplificateurs et au dispositif de compression. Cela se fait par programmation du dispositif acousto-optique comme cela a été décrit précédemment.

Comme représenté en figures 5a et 5b, il est également prévue une boucle adaptative entre la sortie de la chaîne d'amplification et la commande de modulation du dispositif accusto-optique 1. Cette boucle permet de mesurer l'impulsion de sortie et d'agir par un circuit de traitement CT, à l'aide d'un algorithme de convergence, sur la commande de modulation (sur le circuit de commande 8 de la figure 4a).

Selon la figure 5b, on peut prévoir dans certains cas d'application de ne prévoir pour l'extension des impulsions que le dispositif acousto-optique 1 et ne pas prévoir de dispositif d'extension classique.

Une autre architecture de laser intégrant un dispositif programmable est représentée en figure 6. A titre d'exemple, elle utilise une cavité dans laquelle le dispositif acousto-optique sert à compenser les effets de dispersion dus au milieu amplificateur, composants optiques et miroirs constituant la cavité du laser.

On prévoit donc de placer dans la cavité un dispositif acousto-optique dont le signal acoustique est programmé pour compenser les distorsions. Notamment la modulation du signal acoustique est organisée en conséquence des distorsions en fréquences de tous les composants optiques de la cavité. Dans ces conditions une impulsion ultra-courte limitée temporellement par diffraction peut être obtenue sur le faisceau de sortie de cette architecture laser.

**Revendications**

**1.** Source laser comportant :

une source d'impulsions optiques (osc);
un dispositif acousto-optique, comprenant :

- un milieu élasto-optique (1) muni d'un transducteur acoustique (2) capable de générer dans le milieu élasto-optique une onde acoustique modulée selon une direction déterminée;
- de moyens de couplage d'une impulsion optique incidente polarisée (Si) destinée à être amplifiée dans le milieu élasto-optique, et;
- un circuit de programmation (6) de la modulation en fréquences ou en phase de l'onde acoustique,

ledit dispositif acousto-optique étant adapté à fournir une impulsion optique étendue temporellement qui est la convolution de l'impulsion optique incidente avec le signal acoustique;

**caractérisé en ce qu'**elle comprend en outre :

EP 0 882 251 B1

un amplificateur optique (AMP) adapté à amplifier l'impulsion optique étendue;
un dispositif de compression (COMP) adapté à effectuer une compression de l'impulsion optique étendue et amplifiée; et **en ce que**
la modulation de l'onde acoustique est programmée de façon à compenser les distorsions de l'impulsion optique introduites par l'amplificateur optique et le dispositif de compression.

2. Source laser selon la revendication 1, **caractérisée en ce que** l'onde acoustique et l'onde optique sont colinéaires ou quasi-colinéaires.

3. Source laser selon la revendication 1, **caractérisée en ce que** l'onde acoustique et l'onde optique ne sont pas colinéaires ni quasi-colinéaires.

4. Source laser selon la revendication 1, **caractérisée en ce que** le circuit de programmation de la modulation de l'onde acoustique permet la création et leur coexistence dans le milieu élasto-optique d'une continuité de réseaux de pas différents.

5. Source laser selon la revendication 1, **caractérisée en ce qu'**elle comprend un dispositif d'extension (EXP) situé entre, le dispositif acousto-optique (1) et l'amplificateur (AMP) ou en amont du dispositif acousto-optique (1).

6. Source laser la revendication 1, **caractérisée en ce qu'**elle comporte un circuit de modulation (5) et un circuit de boucle adaptative (CC) mesurant les impulsions optiques fournies par le dispositif de compression optique (COMP) à la sortie de la chaîne d'amplification et agissant sur le circuit de modulation (5).

7. Source laser selon la revendication 1, **caractérisée en ce que** l'onde acoustique et l'onde optique incidente ($S_i$) sont colinéaires et dirigées selon un axe du milieu élasto-optique selon lequel un réseau d'indice créé par l'onde acoustique provoque pour certaines fréquences une conversion (TE, TM) du mode de polarisation de l'onde optique incidente.

8. Source laser selon la revendication 1, **caractérisée en ce que** le dispositif acousto-optique comporte un circuit de modulation (5) commandant la modulation de l'onde acoustique sous la commande du circuit de programmation (6) ainsi, qu'un circuit de synchronisation (8) commandant en synchronisme le fonctionnement de la source d'impulsions optique (osc) et le circuit de modulation (5).

9. Source laser selon la revendication 1, **caractérisée en ce que** le milieu élasto-optique comporte une première partie (13) de propagation colinéaire de l'onde optique incidente ($S_i$) et de l'onde acoustique et une deuxième partie faisant un angle avec la première partie, la jonction entre les deux parties comportant une face de réflexion de l'onde acoustique de la deuxième partie vers la première partie.

10. Source laser selon la revendication 9, **caractérisée en ce que** ladite face fait un angle tel avec la direction de propagation de l'onde optique dans le milieu élasto-optique que l'onde optique diffractée peut sortir du milieu sous incidence de Brewster.

11. Source laser selon la revendication 1, **caractérisée en ce que** le milieu élasto-optique comporte, selon la direction de propagation de l'onde acoustique au moins un miroir optique (15) faisant un angle avec cette direction, recevant l'onde optique incidente ($S_i$) et permettant le couplage dans le milieu élasto-optique de l'onde optique incidente colinéairement avec l'onde acoustique.

12. Source laser selon la revendication 1, **caractérisée en ce que** le dispositif acousto-optique comporte :

   - un guide d'onde formé dans une couche d'un matériau cristallin (20) présentant des qualités acousto-optiques réalisée sur un substrat (21) ;
   - des moyens d'induction d'une onde acoustique dans ladite couche colinéairement avec le guide optique.

13. Source laser selon la revendication 12, **caractérisée en ce que** les moyens d'induction d'une onde acoustique comporte des électrodes interdigittées localisées au-dessus du guide optique.

14. Source laser selon la revendication 13, **caractérisée en ce que** les moyens d'induction d'une onde acoustique comportent une face (29) de la couche de matériau cristallin (20) inclinée par rapport à l'axe du guide optique et des électrodes interdigittées (24, 25) permettant d'induire une onde acoustique dans la couche (20) vers ladite face (29) qui réfléchit l'onde acoustique colinéairement au guide.

**Patentansprüche**

1.  Laserquelle, die aufweist:

    eine Quelle optischer Impulse (osc);
    eine akustooptische Vorrichtung, die enthält:

    -   ein elastooptisches Medium (1), das mit einem akustischen Transducer (2) versehen ist, der in der Lage ist, im elastooptischen Medium eine gemäß einer bestimmten Richtung modulierte akustische Welle zu erzeugen;
    -   Mittel zum Koppeln eines einfallenden polarisierten optischen Impulses ($S_i$), der dazu bestimmt ist, im elastooptischen Medium verstärkt zu werden; und
    -   eine Programmierschaltung (6) der Frequenz- oder Phasenmodulation der akustischen Welle,

    wobei die akustooptische Vorrichtung ausgelegt ist, um einen zeitlich erweiterten optischen Impuls zu liefern, der die Konvolution des einfallenden optischen Impulses mit dem akustischen Signal ist;
    **dadurch gekennzeichnet, dass** sie weiter aufweist:

    einen optischen Verstärker (AMP), der ausgelegt ist, um den erweiterten optischen Impuls zu verstärken;
    eine Kompressionsvorrichtung (COMP), die ausgelegt ist, um eine Kompression des erweiterten und verstärkten optischen Impulses durchzuführen; und dass
    die Modulation der akustischen Welle so programmiert ist, dass die Verzerrungen des optischen Impulses, die durch den optischen Verstärker und die Kompressionsvorrichtung eingeführt werden, kompensiert werden.

2.  Laserquelle nach Anspruch 1, **dadurch gekennzeichnet, dass** die akustische Welle und die optische Welle kolinear oder praktisch kolinear sind.

3.  Laserquelle nach Anspruch 1, **dadurch gekennzeichnet, dass** die akustische Welle und die optische Welle weder kolinear noch praktisch kolinear sind.

4.  Laserquelle nach Anspruch 1, **dadurch gekennzeichnet, dass** die Programmierschaltung der Modulation der akustischen Welle die Erzeugung einer Kontinuität von Gittern mit unterschiedlichem Abstand und ihre Koexistenz im elastooptischen Medium ermöglicht.

5.  Laserquelle nach Anspruch 1, **dadurch gekennzeichnet, dass** sie eine Expansionsvorrichtung (EXP) aufweist, die sich zwischen der akustooptischen Vorrichtung (1) und dem Verstärker (AMP) befindet oder der akustooptischen Vorrichtung (1) vorgeschaltet ist.

6.  Laserquelle nach Anspruch 1, **dadurch gekennzeichnet, dass** sie eine Modulationsschaltung (5) und eine adaptive Schleifenschaltung (CC) aufweist, die die von der optischen Kompressionsvorrichtung (COMP) am Ausgang der Verstärkungskette gelieferten optischen Impulse misst und auf die Modulationsschaltung (5) einwirkt.

7.  Laserquelle nach Anspruch 1, **dadurch gekennzeichnet, dass** die akustische Welle und die einfallende optische Welle ($S_i$) kolinear und gemäß einer Achse des elastooptischen Mediums ausgerichtet sind, gemäß der ein von der akustischen Welle erzeugtes Indexgitter bei bestimmten Frequenzen eine Umwandlung (TE, TM) des Polarisationsmodus der einfallenden optischen Welle bewirkt.

8.  Laserquelle nach Anspruch 1, **dadurch gekennzeichnet, dass** die akustooptische Vorrichtung eine Modulationsschaltung (5), die die Modulation der akustischen Welle unter der Steuerung der Programmierschaltung (6) steuert, sowie eine Synchronisationsschaltung (8) aufweist, die den Betrieb der Quelle optischer Impulse (osc) und die Modulationsschaltung (5) synchron steuert.

9.  Laserquelle nach Anspruch 1, **dadurch gekennzeichnet, dass** das elastooptische Medium einen ersten Bereich (13) der kolinearen Ausbreitung der einfallenden optischen Welle ($S_i$) und der akustischen Welle und einen zweiten Bereich aufweist, der einen Winkel mit dem ersten Bereich bildet, wobei die Verbindung zwischen den beiden Bereichen eine Fläche zur Reflexion der akustischen Welle vom zweiten Bereich zum ersten Bereich aufweist.

10. Laserquelle nach Anspruch 9, **dadurch gekennzeichnet, dass** die Fläche einen solchen Winkel mit der Ausbreitungsrichtung der optischen Welle im elastooptischen Medium bildet, dass die gebeugte optische Welle unter einem Brewster-Winkel aus dem Medium austreten kann.

11. Laserquelle nach Anspruch 1, **dadurch gekennzeichnet, dass** das elastooptische Medium in der Ausbreitungsrichtung der akustischen Welle mindestens einen optischen Spiegel (15) aufweist, der einen Winkel mit dieser Richtung bildet, die einfallende optische Welle ($S_i$) empfängt und die kolineare Kopplung der einfallenden optischen Welle im elastooptischen Medium mit der akustischen Welle ermöglicht.

12. Laserquelle nach Anspruch 1, **dadurch gekennzeichnet, dass** die akustooptische Vorrichtung aufweist:

- einen Wellenleiter, der in einer Schicht eines kristallinen Materials (20) mit akustooptischen Eigenschaften geformt wird, die auf einem Substrat (21) hergestellt wird;
- Mittel zur Induktion einer akustischen Welle in die Schicht kolinear zum optischen Wellenleiter.

13. Laserquelle nach Anspruch 12, **dadurch gekennzeichnet, dass** die Mittel zur Induktion einer akustischen Welle Elektroden mit Kammstruktur aufweisen, die oberhalb des optischen Wellenleiters angeordnet sind.

14. Laserquelle nach Anspruch 13, **dadurch gekennzeichnet, dass** die Mittel zur Induktion einer akustischen Welle eine Fläche (29) der Schicht aus kristallinem Material (20), die bezüglich der Achse des optischen Wellenleiters geneigt ist, und Elektroden (24, 25) mit Kammstruktur aufweisen, die es ermöglichen, eine akustische Welle in die Schicht (20) zu der Fläche (29) hin zu induzieren, die die akustische Welle kolinear zum Wellenleiter reflektiert.

## Claims

1. Laser source comprising:

    an optical pulse source (osc);
    an acoustooptic device, comprising:

    - an elastooptic medium (1) provided with an acoustic transducer (2) capable of generating a modulated acoustic wave in the elastooptic medium along a defined direction;
    - means for coupling a polarized incident optical pulse ($S_i$) intended to be amplified in the elastooptic medium; and
    - a circuit (6) for programming the frequency modulation or phase modulation of the acoustic wave,

    the said acoustooptic device being designed to deliver a temporally expanded optical pulse which is the convolution of the incident optical pulse with the acoustic signal;

    **characterized in that** it further comprises:

    an optical amplifier (AMP) designed to amplify the expanded optical pulse;
    a compression device (COMP) designed to compress the expanded and amplified optical pulse; and **in that** the modulation of the acoustic wave is programmed so as to compensate for the distortions of the optical pulse that are introduced by the optical amplifier and the compression device.

2. Laser source according to Claim 1, **characterized in that** the acoustic wave and the optical wave are collinear or almost collinear.

3. Laser source according to Claim 1, **characterized in that** the acoustic wave and the optical wave are neither collinear nor almost collinear.

4. Laser source according to Claim 1, **characterized in that** the circuit for programming the modulation of the acoustic wave makes it possible for a continuity of gratings of different spacings to be created in the elastooptic medium and for them to coexist therein.

5. Laser source according to Claim 1, **characterized in that** it comprises an expansion device (EXP) located between the acoustooptic device (1) and the amplifier (AMP) or upstream of the acoustooptic device (1).

6. Laser source according to Claim 1, **characterized in that** it includes a modulation circuit (5) and an adaptive loop circuit (CC) which measures the optical pulses delivered by the optical compression device (COMP) at the output of the amplification chain and acts on the modulation circuit (5).

7. Laser source according to Claim 1, **characterized in that** the acoustic wave and the incident optical wave ($S_i$) are collinear and directed along an axis of the elastooptic medium in which an index grating created by the acoustic wave brings about, for certain frequencies, a conversion (TE, TM) of the mode of polarization of the incident optical wave.

8. Laser source according to Claim 1, **characterized in that** the acoustooptic device includes a modulation circuit (5) controlling the modulation of the acoustic wave under the control of the programming circuit (6), and a synchronization circuit (8) which synchronizes the operation of the optical pulse source (osc) and the modulation circuit (5).

9. Laser source according to Claim 1, **characterized in that** the elastooptic medium includes a first part (13) for the collinear propagation of the incident optical wave ($S_i$) and of the acoustic wave and a second part making an angle with the first part, the junction between the two parts having a face for reflecting the acoustic wave from the second part to the first part.

10. Laser source according to Claim 9, **characterized in that** the said face makes an angle with the direction of propagation of the optical wave in the elastooptic medium such that the diffracted optical wave can exit the medium at Brewster incidence.

11. Laser source according to Claim 1, **characterized in that** the elastooptic medium includes, along the direction of propagation of the acoustic wave, at least one optical mirror (15) making an angle with this direction, receiving the incident optical wave ($S_i$) and allowing the incident optical wave to be collinearly coupled with the acoustic wave in the elastooptic medium.

12. Laser source according to Claim 1, **characterized in that** the acoustooptic device includes:

    - a waveguide formed in a layer of a crystalline material (20) having acoustooptic properties, this layer being formed on a substrate (21);
    - means for inducing an acoustic wave in the said layer collinearly with the optical guide.

13. Laser source according to Claim 12, **characterized in that** the means for inducing an acoustic wave include interdigitated electrodes located above the optical guide.

14. Laser source according to Claim 13, **characterized in that** the means for inducing an acoustic wave include a face (29) of the layer of crystalline material (20), this face being inclined with respect to the axis of the optical guide, and interdigitated electrodes (24, 25) making it possible to induce an acoustic wave in the layer (20) towards said face (29) which reflects the acoustic wave collinearly with respect to the guide.

FIG.1

FIG.2a

FIG.2b

FIG.2c

FIG.3a

FIG.3b

[110]

[ī10]

Z

POLARISEUR

ABSORBANT ACOUSTIQUE

ANALYSEUR

7

18

≈ 80°

2

1

6

5

## FIG.4a

8

6

5

3

2

10

Sd

Si

7

BREWSTER y

12

13

11

1

## FIG.4b

1

15

16

3

13

Si

Sd

## FIG.4c

FIG.4d

FIG.4e

FIG.5a

FIG.5b

FIG.6